# EUROPEAN PATENT APPLICATION

(11) **EP 4 748 465 A1**
(43) Date of publication of application: **27.05.2026**
(21) Application number: 25218221.7
(22) Date of filing: 25.11.2025
(51) Int. Cl.: B01D 5/00

(54) **DISPLACEABLE CRYOGENIC DEGASSING SYSTEM**

(30) Priority: 25.11.2024 BE 202405824
(71) Applicant: AQ Degassing B.V., 2030 Antwerpen (BE)
(72) Inventor: DEMETSENAERE, Joris, 2030 Antwerpen (BE)
(74) Representative: Arnold & Siedsma

(57) **Abstract**

A vehicle with a cryogenic degassing system for cryogenic degassing of one or more airflows, the degassing system comprising a frame in which the displaceable system is mounted, wherein the frame is connected tiltably to the vehicle so that the cryogenic degassing system is tiltable between a transport position and an upright position, wherein in the transport position the frame has a lying orientation on the vehicle, and wherein in the upright position the displaceable cryogenic degassing system can operate in one of the first, second or third mode, in order to displace the system; wherein the system has at least one first condenser and at least one second condenser, wherein the first condenser has a first inlet and a first outlet and wherein the second condenser has a second inlet and a second outlet, such that the first and the second condenser can treat at least one airflow, wherein the degassing system comprises a control system, which control system comprises a plurality of valves and a channel network.

## Description

### Field of the invention

The invention relates to a device for cryogenic degassing of an airflow.

### Background

The principle of cooling an airflow in a heat exchanger with a first passage for the airflow and a second passage for liquid nitrogen is known. By cooling the airflow vapours and gases can be removed from the airflow. This process is referred to as cryogenic degassing. A gas is defined as a substance which takes a gaseous form at ambient temperatures. In the context of the application a gas is further defined as a substance having a boiling point which lies between ambient temperature and -200°C. Vapours originate from substances which are liquid at ambient temperatures. Liquids can typically evaporate until air is saturated. Depending on the air temperature, a determined quantity of vapour is typically absorbable by air before fog or mist formation occurs. Cooling of the air in the heat exchanger will greatly reduce the solubility of vapours, so that vapours deposit against the walls of the heat exchanger. This forms a condensate which can be collected at the bottom of the heat exchanger. By cooling the air in the heat exchanger gases will reach their condensation point, depending on the temperature to which the air is cooled. Gases will hereby condense against the walls of the heat exchanger. Both gases and vapours can thus be collected at the bottom of the heat exchanger.

CN 113828000 A discloses a system and a method for treating residual gas in a production process for vinyl chloride. The system comprises three condensers which are put into action cyclically, wherein two condensers operate in series to condense the gas while a third condenser is thawed. This is a fixed, stationary industrial installation.

US 7,416,642 B2 describes an installation for cooling a heated juice, such as grape juice, by means of evaporation at low pressure. The installation uses two condensers which can be explicitly connected both in series and in parallel by means of valves. This is also a stationary installation for a production process.

US 4,253,517 A discloses a system for utilizing residual heat from a power plant. The system comprises a condenser system with a plurality of sections which can switch between parallel operation (single pass) and serial operation (multipass) by means of a valve system. This is a large-scale, fixed installation.

CN 115068969 A describes an installation for recovering benzene from residual gas. The installation makes use of two condensers connected in series. An important feature is that the condensers can switch position, so that the first condenser in the series can be thawed with the heat of the incoming gas, while the second condenser continues the cooling. The system was designed as a fixed industrial setup.

In the petrochemical industry degassers are not always available at all locations where they are needed, such as when loading and unloading vessels. Furthermore, the costs of placing degassers at all locations where they are needed are often also very high. This can be due to the purchase costs of the degassers and the costs of the installation and maintenance of the equipment. The requirements for degassers also vary drastically, depending on the size of the storage tank or the process vessel having to be degassed. It may thus be the case that a degasser with a capacity of only several cubic metres per hour is needed for small storage tanks, while capacities of up to hundreds of cubic metres per hour are needed for large tanks.

### Summary of the invention

Embodiments of the invention have the object of providing a solution to the above stated problems.

According to a first aspect, a displaceable cryogenic degassing system is provided for cryogenic degassing of one or more airflows. The system comprises a displaceable frame in which the displaceable system, which is mountable on a vehicle such as a truck, is mounted for displacing the system. The system has at least one first condenser and at least one second condenser. The first condenser has a first inlet and a first outlet, and the second condenser has a second inlet and a second outlet, so that the first and the second condenser can treat at least one airflow. The degassing system further comprises a control system comprising a plurality of valves and a channel network which are configured to guide the one or more airflows through the degassing system. A first condenser can be understood to mean a heat exchanger designed to cool air by means of a first passage for the airflow. A second condenser can be understood to mean a heat exchanger designed to cool air by means of liquid nitrogen in a second passage. Provision can be made for the displaceable cryogenic degassing system to provide a more efficient and more flexible solution for the cryogenic degassing of one or more airflows compared to fixed degassers which are not available at all locations where they are needed. The displaceable system can be mounted on a truck and transported to the desired location in simple manner, whereby the installation costs and maintenance costs of fixed degassers are avoided. In a first mode the first or the second condenser can treat an airflow independently. In a second mode the first and the second condenser can treat an airflow in parallel. In a third mode the first and the second condenser can treat an airflow in series. The use of a plurality of condensers and a control system not only enables treating airflows separately, but also enables highly refined treatment of an airflow or treatment of an airflow requiring a large capacity. This provides a greater flexibility in degassing of different types of airflow and makes it possible to optimize the efficiency of the degassing. The displaceable cryogenic degassing system can hereby be adapted to different conditions and airflows, whereby the efficiency of the degassing is increased and the costs are reduced. This can result in considerable advantages for the petrochemical industry, particularly when loading and unloading vessels where degassers are not always available.

The control system preferably comprises a first inlet valve between the first inlet and the first condenser, and a second inlet valve between the second inlet and the second condenser. A first inlet valve can be understood to mean a valve, also referred to as shut-off valve, which is situated between the first inlet and the first condenser and which can be opened or closed to control the airflow through the first condenser. A second inlet valve can be understood to mean a valve which is situated between the second inlet and the second condenser and which can be opened or closed to control the airflow through the second condenser. Provision can be made for the use of the first and second inlet valves between the inlets and condensers to provide further advantages relative to a control without valves. Controlling the airflow to the different condensers enables further improvement of the efficiency of the degassing. This can result in better collection of vapours and gases from the airflow, which increases the safety of the working environment. The use of the valves furthermore enables the system to be better adapted to different conditions and airflows, this resulting in increased efficiency and cost saving. The use of the first and second inlet valves between the inlets and condensers also provides advantages in combination with the independent claim of the displaceable cryogenic degassing system. The use of a plurality of condensers and valves enables the system to be adapted to different conditions and airflows, this increasing the efficiency of the degassing. This can result in considerable cost savings and improved safety in the petrochemical industry, particularly when loading and unloading vessels where degassers are not always available.

The control system preferably comprises a first channel portion between the first inlet and the second inlet so that the first inlet is connected to the second inlet, and wherein the control system comprises a third valve in the first channel portion so that an airflow between the first inlet and the second inlet can be shut off. A first channel portion can be understood to mean a part of the channel network of the control system which is situated between the first inlet and the second inlet. A third valve can be understood to mean a valve which is situated in the first channel portion and which can be opened or closed to shut off the airflow between the first inlet and the second inlet. The use of a plurality of condensers, valves and channel portions enables the system to be adapted to different conditions and airflows, this increasing the efficiency of the degassing further. **In** this situation one air inlet can for instance be used for supplying an airflow to both the first and/or the second condenser. This allows the first or the second condenser to operate separately, or both condensers to operate simultaneously.

Preferably, the first outlet is connected to the first atmospheric outlet and the control system comprises a fourth valve which is provided to shut off an airflow between the first outlet and the first atmospheric outlet. The control system also comprises a second channel portion upstream of the fourth valve, which is situated between the first outlet and the second inlet, so that an airflow can flow from the first outlet to the second inlet.

A first atmospheric outlet can be understood to mean an outlet wherein the degassed air is returned into the atmosphere. A fourth valve can be understood to mean a valve which is situated in the control system and which can be opened or closed to shut off the airflow between the first outlet and the first atmospheric outlet. A second channel portion can be understood to mean a part of the channel network of the control system which is situated between the first outlet and the second inlet, so that an airflow can flow from the first outlet to the second inlet. Provision can be made for the use of the first atmospheric outlet, the fourth valve and the second channel portion between the first outlet and the second inlet to provide further advantages relative to a control without these features. Shutting off the airflow between the first outlet and the first atmospheric outlet enables the degassed air to be carried from the first outlet to the second inlet, where the airflow can be treated by the second condenser after the first condenser has already performed a treatment. **In** this way the degassing system can operate in the third mode.

The control system comprises a fifth valve in the second channel portion, so that an airflow between the first outlet and the second inlet can be shut off. This prevents an airflow from flowing from the first outlet to the second inlet in a situation where the degassing system can operate both in parallel and in series. A fifth valve can be understood to mean a valve which is situated in the second channel portion of the control system and which can be opened or closed to shut off the airflow between the first outlet and the second inlet. Provision can be made for the use of the fifth valve in the second channel portion to provide further advantages relative to a control without this valve. Shutting off the airflow between the first outlet and the second inlet can improve the efficiency of the degassing further, especially in situations where the system can operate both in parallel and in series. This can result in better collection of vapours and gases from the airflow, which increases the safety of the working environment. The use of the fifth valve furthermore enables the system to be better adapted to different conditions and airflows, this resulting in increased efficiency and cost saving.

Each condenser preferably has a flow rate of at least 50 Nm³/h, preferably at least 450 Nm³/h.

A flow rate can be understood to mean the quantity of air flowing through the condenser per unit of time.

Provision can be made for the use of a flow rate of at least 50 Nm³/h, preferably at least 450 Nm³/h, per condenser to provide further advantages relative to a degassing system without these features. The use of a plurality of condensers with a higher flow rate enables the system to be adapted to different conditions and airflows, this increasing the efficiency of the degassing further. This can result in considerable cost savings and improved safety in the industry.

The control system preferably comprises a control device which is configured to control the plurality of valves so that the degassing system operates in one of the first, second or third mode. A control device can be understood to mean a mechanism or apparatus designed to control the operation of the control system. Provision can be made for the use of a control device which is configured to control the plurality of valves to provide further advantages relative to a control without these features. The use of an automated control device enables operation of the degassing system to be controlled more efficiently and accurately, this resulting in increased efficiency and cost saving. The use of a control device furthermore enables the system to be better adapted to different conditions and airflows possible, this increasing the safety of the working environment.

The first and the second condenser preferably comprise a discharge vessel, wherein the discharge vessel has at the top a filling opening which is connected to a liquid outlet of the respective condenser and wherein the discharge vessel further has at the bottom a liquid outlet which is closable with a cover. A discharge vessel can be understood to mean a container for collecting and discharging liquids, such as for instance condensate. A liquid outlet can be understood to mean an opening in the condenser through which liquid can be discharged. Provision can be made for the use of a discharge vessel in the first and second condenser to provide further advantages relative to a degassing system without these features. Collecting liquids in the discharge vessel can prevent these liquids from impeding operation of or contaminating the degassing system. The closable cover at the bottom of the discharge vessel makes it possible to discharge the liquids safely without any leakage or spillage occurring. This increases the safety of the degassing system and reduces the chances of damage to the surrounding area.

The first condenser, the second condenser and the control system are preferably provided inside the frame. This has the advantage that the first condenser, the second condenser and the control system are protected against damage during transport and use. This furthermore makes the degassing system easier to transport and to install at different locations. This provides for more flexibility in use of the degassing system and reduces the costs of installation and maintenance.

The frame is preferably tiltably connectable to the vehicle so that the displaceable cryogenic degassing system is tiltable between a transport position and an upright position, wherein in the transport position the frame has a lying orientation on the vehicle, and wherein in the upright position the displaceable cryogenic degassing system can operate in one of the first, second or third mode. This has the advantage that the degassing system can be easily transported and installed at different locations. Owing to the tiltable frame, the degassing system can be easily mounted on the vehicle in the transport position and can be arranged for use in simple manner in the upright position. This makes the degassing system more flexible and enables it to be easily adapted to different conditions and airflows. This results in cost savings and increase the efficiency of the degassing.

According to a further aspect, a method is provided for degassing one or more airflows by means of a degassing system as described above. The method comprises of:
- displacing the degassing system to a tank with a substance to be degassed;
- connecting the first and/or second inlet of the degassing system to the tank;
- feeding a flow of air through the tank to the air inlet and through the device in order to thus cryogenically degas the air.

According to a further aspect, a vehicle with a cryogenic degassing system as described here above is provided. **In** favor of a more brief description, the combination of a vehicle with the preferred exemplary embodiments of the cryogenic degassing system is not repeated.

### Brief description of the figures

The above stated and other advantageous features and objects of the invention will become more apparent, and the invention better understood, on the basis of the following detailed description when read in combination with the accompanying drawings, in which:
Figure 1 shows a flow diagram of an exemplary embodiment of a degassing system;
Figure 2 shows a flow diagram of a further exemplary embodiment of the degassing system according to figure 1.

### Detailed embodiments

The following detailed description relates to determined specific embodiments. The teaching hereof can however be applied in different ways. The same or similar elements are designated in the drawings with the same reference numerals.

The present invention will be described with reference to specific embodiments. The invention is however not limited thereto, but solely by the claims.

As used here, the singular forms "a" and "the" comprise both the singular and plural references, unless clearly indicated otherwise by the context.

The terms "comprising", "comprises" and "composed of" as used here are synonymous with "including". The terms "comprising", "comprises" and "composed of" when referring to stated components, elements or method steps also comprise embodiments which "consist of" the components, elements or method steps.

The terms first, second, third and so on are further used in the description and in the claims to distinguish between similar elements and not necessarily to describe a sequential or chronological order, unless this is specified. It will be apparent that the thus used terms are mutually interchangeable under appropriate conditions and that the embodiments of the invention described here can operate in an order other than described or illustrated here.

Reference in this specification to "one embodiment", "an embodiment", "some aspects", "an aspect" or "one aspect" means that a determined feature, structure or characteristic described with reference to the embodiment or aspect is included in at least one embodiment of the present invention. The manifestations of the sentences "in one embodiment", "in an embodiment", "some aspects", "an aspect" or "one aspect" in different places in this specification thus do not necessarily all refer to the same embodiment or aspects. As will be apparent to a skilled person in this field, the specific features, structures or characteristics can further be combined in any suitable manner in one or more embodiments or aspects. Although some embodiments or aspects described here comprise some but no other features which are included in other embodiments or aspects, combinations of features of different embodiments or aspects are further intended to fall within the context of the invention and to form different embodiments or aspects, as would be apparent to the skilled person. In the appended claims all features of the claimed embodiments or aspects can for instance be used in any combination.

The same or similar elements are designated in the drawing with the same reference numerals.

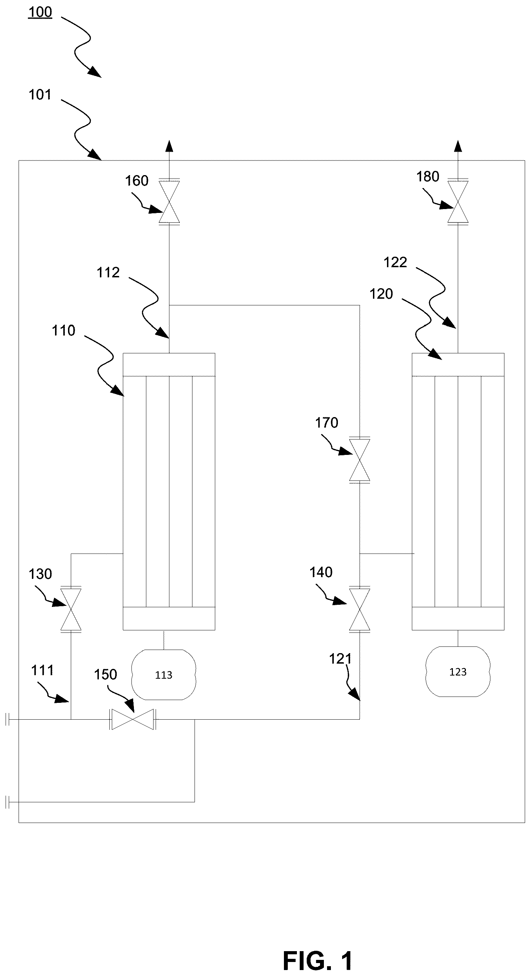

Figure 1 shows a flow diagram of an exemplary embodiment of a displaceable cryogenic degassing system 100. A cryogenic degassing system 100 can be understood to mean an apparatus which is used to purify gaseous or liquid substances by removing impurities via the use of cryogenic temperatures. A displaceable degassing system 100 can be understood to mean a degassing system which can be displaced in relatively simple manner from one location to another, for instance by means of wheels or another type of transport means, such as a vehicle such as a truck.

The degassing system 100 is mounted in a displaceable frame 101, which means that the degassing system 100 is fixed on or in a frame which can be mounted on a vehicle and can be displaced from one location to another. The frame 101 provides the degassing system with the necessary structure and support to hold the system in place during transport and use. The frame being displaceable means that the degassing system 100 can be utilized at different locations where it is needed, whereby it provides a flexible and versatile solution for degassing airflows. This for instance makes the degassing system 100 suitable for use in unloading vessels, where degassers are not always available and where the degassing system can be displaced from one vessel to another. The frame of the displaceable cryogenic degassing system is designed to be tiltable and connectable to the vehicle, so that the system can be displaced between a transport position and an upright position. In the transport position the frame has a lying orientation on the vehicle, which means that the system can be transported safely without any risk of it falling over. In the upright position the degassing system can operate in one of the first, second or third mode. This provides the option of using the system at different locations and in different conditions, depending on the application requirements. The tiltable and connectable frame makes the degassing system highly flexible and versatile, which can result in a more efficient and more effective degassing process and lower costs for the petrochemical industry.

The degassing system 100 comprises at least one first condenser 110 and at least one second condenser 120, each having an inlet and an outlet for treating airflows. This means that each condenser has its own inlet and its own outlet. The first condenser 110 thus has a first inlet 111 and a first outlet 112, and the second condenser 120 has a second inlet 121 and a second outlet 122. The use of a plurality of condensers provides more options for treating the airflows separately or in combination, and makes it possible to optimize the efficiency of the degassing. A first condenser 110 and a second condenser 120 can be understood to mean a heat exchanger which cools an airflow, the airflow being cooled by means of liquid nitrogen in this situation. Although the specific term air is used, wherein air is a mixture of gases consisting mainly of nitrogen (about 78%) and oxygen (about 21%), it will be apparent that other gases or liquids can also be degassed.

The degassing system 100 also comprises a control system with a plurality of valves and a channel network for guiding the one or more airflows through the degassing system so that, in a first mode, the first or the second condenser 110, 120 can treat an airflow independently. This means that the first condenser 110 or the second condenser 120 can be switched on separately in order to treat a single airflow. Or two separate airflows at the same time. This provides the option of treating the airflow in a specific manner, depending on the application requirements. For example, if the airflow must have a determined temperature or degree of humidity, one of the condensers can be used to treat the airflow in accordance with these requirements. In a second mode the first and the second condenser 110, 120 can treat an airflow in parallel. This means that the two condensers are switched on simultaneously and the airflow runs through both condensers in parallel. This second mode provides a higher capacity for degassing airflows, because both condensers operate simultaneously. This makes it possible to treat larger airflows or to have the degassing progress more quickly. In a third mode the first and the second condenser 110, 120 can treat an airflow in series. This means that the airflow passes through the first condenser first, and then through the second condenser. This mode provides the option of highly refined treatment of the airflow, because the airflow passes through the first condenser first for an initial treatment and then through the second condenser for a more detailed treatment. This mode can for instance be used when the airflow is highly contaminated and requires a thorough treatment. The use of a plurality of condensers 110, 120 and a control system makes it possible to treat airflows separately or in combination in different ways, this making the system highly flexible and versatile. This provides the option of treating the airflows and adjusting them to different conditions and applications very precisely. This can for instance result in a more efficient degassing process and lower costs for the petrochemical industry.

Figure 1 further shows that the control system in the degassing system 100 comprises a first inlet valve 130 between the first inlet 111 and the first condenser 110, and a second inlet valve 140 between the second inlet 121 and the second condenser 120. These valves are configured to control the airflows and to switch between the different modes of treatment of the airflows. By means of these valves the airflow can be guided to the first condenser, the second condenser or both condensers in parallel or in series. This provides the option of treating the airflow in different ways and adapting them to the application requirements. Owing to the control system and the inlet valves, the degassing system can operate more efficiently and effectively, which can result in lower costs and better results.

The control system in the degassing system 100 also comprises a first channel portion between the first inlet and the second inlet, so that the first inlet is connected to the second inlet. This channel portion makes it possible to control the airflow between the first and second condenser and to switch between the different modes of treatment of the airflows. The control system also comprises a third valve 150 in the first channel portion, whereby the airflow between the first and second condenser can be shut off. This provides the option of guiding the airflow only through the first condenser or only through the second condenser, depending on the application requirements.

The first outlet 112 of the first condenser 110 of the degassing system is connected to a first atmospheric outlet, which means that the treated airflow from the system can be discharged to the atmosphere. The control system also comprises a fourth valve 160 which is provided to shut off the airflow between the first outlet 112 and the first atmospheric outlet. This provides the option of shutting off the atmospheric outlet. The second outlet 122 of the second condenser 120 of the degassing system can also be connected to a second atmospheric outlet, which means that the treated airflow from the second condenser 120 can be discharged to the atmosphere. The control system also comprises a sixth valve 180 which is provided to shut of the airflow between the second outlet 122 and the second atmospheric outlet. This provides the option of shutting off the second atmospheric outlet.

The control system also comprises a second channel portion upstream of the fourth valve 160, between the first outlet 112 and the second inlet 121, so that an airflow can flow from the first outlet 112 to the second inlet 121. This provides the option of recirculating the airflow and guiding it through the degassing system once again in order to increase the efficiency of the degassing. The control system and the valves make it possible to treat the airflow in different ways and to adapt them to the application requirements, which can result in a more efficient and more effective degassing process.

The control system in the degassing system also comprises a fifth valve 170 in the second channel portion, between the first outlet 112 and the second inlet 121. This fifth valve provides the option of shutting off the airflow between the first outlet 112 and the second inlet 121, which means that the airflow can only be guided through the first condenser. This provides the option of treating the airflow in a specific manner, depending on the application requirements.

Each condenser in the degassing system is designed to have a flow rate of at least 50 Nm³/h. Each condenser preferably has a flow rate of at least 450 Nm³/h. This means that the condensers are able to treat airflows of a determined size and capacity, and that the system is suitable for use in different applications and conditions. Owing to the design of the condensers, the degassing system can operate more efficiently and effectively, which can result in lower costs and better results for the petrochemical industry.

**In** order to control all valves in the degassing system the control system comprises a control device (not shown) which is designed to control the plurality of valves. This control device is configured to operate the valves and to switch between the different modes of treatment of the airflows, depending on the application requirements. This means that the degassing system is able to operate in a flexible and versatile manner and that the airflows can be treated and adapted in different ways. The use of the control device enables the degassing system to operate more efficiently and effectively, which can result in lower costs and better results.

Each first and second condenser 110, 120 in the degassing system can comprise a discharge vessel 113, 123. Each discharge vessel 113, 123 has on the upper side a filling opening which is connected to a liquid outlet of the respective condenser. This means that the discharge vessel collects the liquid which flows from the condenser during degassing of the airflow. The discharge vessel also has on the underside a liquid outlet which is closable with a cover. This provides the option of discharging and treating the liquid in a controlled manner, for instance by emptying the discharge vessel or analysing the liquid. The use of the discharge vessels ensures that the degassing system can operate efficiently and effectively because the liquid flowing from the condensers is collected and treated in a controlled manner.

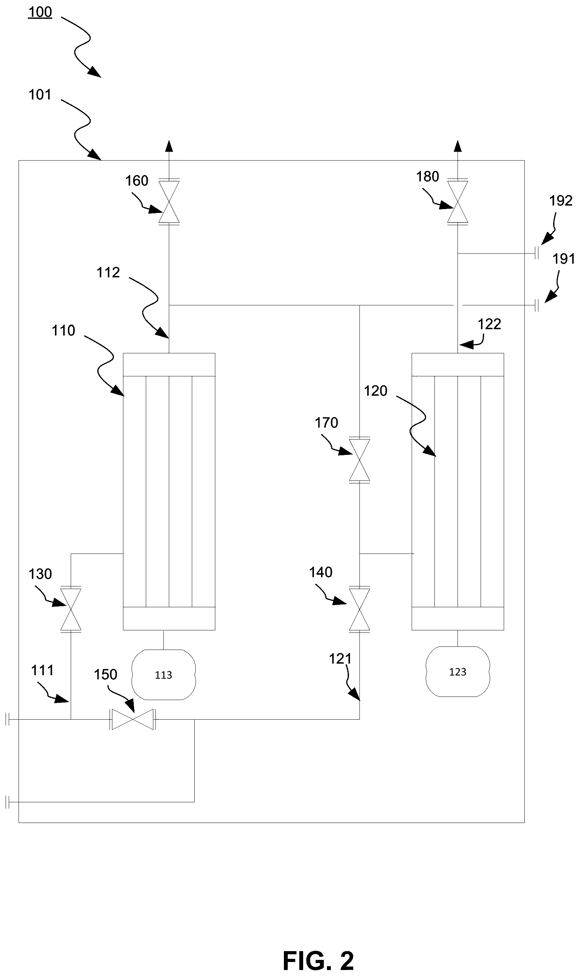

Figure 2 shows a flow diagram of a further exemplary embodiment of a displaceable cryogenic degassing system 100. The same or similar elements are designated in the drawing with the same reference numerals as in figure 1.

The embodiment shown in figure 2 allows the displaceable cryogenic degassing system 100 to further be connected to an external treatment system or a second displaceable cryogenic degassing system.

For this purpose the control system can comprise a third channel portion, the third channel portion extending between the first outlet 112 and a first external connection 191. The first inlet of a second displaceable cryogenic degassing system can for instance be connected to the first external connection, or a further treatment system can be connected. The control system can comprise a fourth channel portion which extends between the second outlet 122 and a second external connection 192. The first or the second inlet of a second displaceable cryogenic degassing system can for instance be connected to the second external connection 192, or a further treatment system can be connected. The first and second external connections allow the cryogenic degassing system to be used in a fourth and/or a fifth mode. It is noted that each first and second external connection can be provided separately with a valve (not shown) or a closing flange so that the first and second external connections are closable, so that the displaceable cryogenic degassing system can be used as independent system when the control system comprises a third and fourth channel portion. When, in the first or the second mode, the cryogenic degassing system leaves the first and/or the second external connections 191, 192 open and for instance connects them to another cryogenic degassing system, the cryogenic degassing system can in a fourth mode guide the airflow which is treated independently by the first and the second condenser in the first mode on to the external treatment device via the first and/or the second external connections 191, 192. The fourth mode is thus a combination of the first or the second mode and the guiding out of the already treated airflow for further treatment of the respective airflows.

When, in the third mode, the cryogenic degassing system leaves the second external connection 192 open and closes the fourth valve 160 and the sixth valve 180, it becomes possible to use the cryogenic degassing system in a fifth mode. This is because this allows an airflow to be treated in series by the first and the second condensers in the cryogenic degassing system, and to then guide this airflow treated in series on to an external cryogenic degassing system or other treatment device.
The skilled person will appreciate on the basis of the above description that the invention can be embodied in different ways and on the basis of different principles. The invention is not limited here to the above described embodiments. The above described embodiments and the figures are purely illustrative and serve only to increase understanding of the invention. The invention will not therefore be limited to the embodiments described herein, but is defined in the claims.

## Claims

1. A vehicle with a cryogenic degassing system (100) for cryogenic degassing of one or more airflows, the degassing system comprising a frame (101) in which the displaceable system is mounted, wherein the frame (101) is connected tiltably to the vehicle so that the cryogenic degassing system is tiltable between a transport position and an upright position, wherein in the transport position the frame has a lying orientation on the vehicle, and wherein in the upright position the displaceable cryogenic degassing system can operate in one of the first, second or third mode, in order to displace the system; wherein the system has at least one first condenser (110) and at least one second condenser (120), wherein the first condenser has a first inlet (111) and a first outlet (112) and wherein the second condenser has a second inlet (121) and a second outlet (122), such that the first and the second condenser can treat at least one airflow, wherein the degassing system further comprises a control system, which control system comprises a plurality of valves and a channel network which are configured to guide the one or more airflows through the degassing system, such that
in a first mode the first or the second condenser (110, 120) can treat an airflow independently;
in a second mode the first and the second condenser (110, 120) can treat an airflow in parallel; and
in a third mode the first and the second condenser (110, 120) can treat an airflow in series.

2. The vehicle according to the foregoing claim, wherein the control system comprises a first inlet valve (130) between the first inlet and the first condenser, and comprises a second inlet valve (140) between the second inlet and the second condenser.

3. The vehicle according to any one of the foregoing claims, wherein the control system comprises a first channel portion between the first inlet and the second inlet so that the first inlet is connected to the second inlet, and wherein the control system comprises a third valve (150) in the first channel portion so that an airflow between the first inlet and the second inlet can be shut off.

4. The vehicle according to any one of the foregoing claims, wherein the first outlet is connected to the first atmospheric outlet and the control system comprises a fourth valve (160) which is provided to shut off an airflow between the first outlet and the first atmospheric outlet, and wherein the control system comprises a second channel portion upstream of the fourth valve, provided between the first outlet and the second inlet, so that an airflow can flow from the first outlet to the second inlet.

5. The vehicle according to the foregoing claim, wherein the control system comprises a fifth valve (170) in the second channel portion so that an airflow between the first outlet and the second inlet can be shut off.

6. The vehicle according to any one of the foregoing claims, wherein each condenser has a flow rate of at least 50 Nm³/h, preferably at least 450 Nm³/h.

7. The vehicle according to any one of the foregoing claims, wherein the control system comprises a control device which is configured to control the plurality of valves (130, 140, 150, 160, 170, 180) so that the degassing system operates in one of the first, second or third mode.

8. The vehicle according to any one of the foregoing claims, wherein the first and the second condenser comprise a discharge vessel, wherein the discharge vessel has at the top a filling opening which is connected to a liquid outlet of the respective condenser and wherein the discharge vessel further has at the bottom a liquid outlet which is closable with a cover.

9. The vehicle according to any one of the foregoing claims, wherein the first condenser, the second condenser and the control system are provided inside the frame.

10. Method for degassing one or more airflows by means of a degassing system according to any one of the foregoing claims, the method comprising of:
- displacing the degassing system to a tank with a substance to be degassed;
- connecting the first and/or second inlet of the degassing system to the tank;
- feeding a flow of air through the tank to the air inlet and through the device in order to thus cryogenically degas the air.
